# EUROPÄISCHE PATENTSCHRIFT

(11) **EP 3 498 972 B1**
(45) Veröffentlichungstag und Bekanntmachung des Hinweises auf die Patenterteilung: **19.08.2020**
(21) Anmeldenummer: 18210774.8
(22) Anmeldetag: 06.12.2018
(51) Int. Cl.: F01D 5/14, F01D 9/04, F01D 9/06

(54) **TURBINENMODUL FÜR EINE STRÖMUNGSMASCHINE**
TURBINE MODULE FOR A TURBOMACHINE
MODULE DE TURBINE POUR UNE TURBOMACHINE

(30) Priorität: 14.12.2017 DE 102017222817
(43) Veröffentlichungstag der Anmeldung: 19.06.2019
(73) Patentinhaber: MTU Aero Engines AG, 80995 München (DE)
(72) Erfinder: Ramm, Günter, 82223 Eichenau (DE); Hoeger, Martin, 85435 Erding (DE); Raab, Irene, verstorben (DE); Gündogdu, Yavuz, 85737 Ismaning (DE)

(56) Entgegenhaltungen:
- EP-A1- 2 806 102
- EP-A1- 3 121 383
- US-A1- 2010 272 566
- US-A1- 2013 051 996

## Beschreibung

### Technisches Gebiet

Die vorliegende Erfindung betrifft ein Turbinenmodul für eine Strömungsmaschine, mit Umströmungsstrukturen zum Umströmen im Heißgaskanal.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Das Heißgas durchströmt auf einem Pfad von der Brennkammer über die Turbine bis zur Düse ein Volumen, wobei vorliegend zunächst ein Turbinenmodul und damit ein Abschnitt dieses Pfads bzw. Volumens betrachtet wird. Der von dem Heißgas durchströmte Teil des Turbinenmoduls wird als "Heißgaskanal" bezeichnet.

Das in Rede stehende Turbinenmodul begrenzt also zum einen den Heißgaskanal nach radial innen und radial außen. Zum anderen weist es mehrere, in dem Heißgaskanal angeordnete Umströmungsstrukturen auf. Davon sind zumindest einige als Umlenkschaufeln ausgebildet, bei anderen handelt es sich bevorzugt um Stützstreben bzw. entsprechende Verkleidungen, das Turbinenmodul kann insbesondere ein Turbinenzwischengehäuse sein (*Mid Turbine Frame*). Wie die vorstehende Bezugnahme auf ein Strahltriebwerk soll dies den vorliegenden Gegenstand illustrieren, ihn aber zunächst nicht in seiner Allgemeinheit beschränken. Bei der Strömungsmaschine kann es sich bspw. auch um eine stationäre Gas- oder Dampfturbine handeln. Die DE 10 2004 036 594 A1 offenbart eine ähnliche Strömungsstruktur für eine Gasturbine mit Stützrippen und Leitrippen im Strömungskanal.

Die EP 3 121 383 A1 betrifft ein Turbinenzwischengehäuse mit Stützstreben bzw. *Fairings,* zwischen denen Leitschaufeln zur Strömungsoptimierung angeordnet sind. Diese haben unterschiedliche axiale Sehnenlängen und sind den *Fairings* gestaffelt zugeordnet.

Die US 2010/0272566 A1 betrifft ebenfalls ein Zwischengehäuse mit *Fairings* und Leitschaufeln, wobei zur Strömungsoptimierung zusätzlich Leitbleche Anwendung finden.

### Darstellung der Erfindung

Der vorliegenden Erfindung liegt das technische Problem zugrunde, ein besonders vorteilhaftes Turbinenmodul anzugeben.

Erfindungsgemäß wird diese Aufgabe mit dem Turbinenmodul gemäß Anspruch 1 gelöst. Dieses weist eine erste und eine zweite Umströmungsstruktur auf, wobei die zweite Umströmungsstruktur als Umlenkschaufel vorgesehen ist und eine geringere Profildicke als die erste Umströmungsstruktur hat. Die Umströmungsstrukturen sind umlaufend aufeinanderfolgend angeordnet, haben also zumindest einen gewissen axialen Überlapp. Mit der ersten und der zweiten Umströmungsstruktur werden somit zunächst von ihrer Bauart her unterschiedliche Umströmungsstrukturen ("dick" und "dünn, umlenkend"), die für gewöhnlich axial aufeinanderfolgend in gesonderten Abschnitten bzw. Stufen vorgesehen sind, in einem Modul zusammengefasst. Diese Kombination kann insoweit von Vorteil sein, als über den gesamten Umlauf in der Regel eine relativ geringe Zahl an ersten (dicken) Umströmungsstrukturen vorgesehen ist. Dementsprechend wäre das Heißgas über vergleichsweise große Teilungsbereiche nicht geführt. Eine erste Verbesserung wird insofern mit den zweiten (dünnen) Umlenkschaufeln erreicht, es lässt sich nämlich bspw. ein einheitlicher Abströmwinkel einstellen. Dies kann bspw. hinsichtlich der Gleichförmigkeit der Anströmung zum nachgelagerten Rotor von Vorteil sein. Die Erfinder haben allerdings festgestellt, dass selbst im Falle eines einheitlichen Abströmwinkels noch immer Ungleichförmigkeiten in der Machzahl bzw. dem Massenstrom verbleiben können. Diese sind nur bedingt über eine Veränderung der Teilung (dicke Schaufel + eine/mehrere dünne Schaufeln) zugänglich, weswegen erfindungsgemäß zusätzlich die radiale Weite des Heißgaskanals variiert wird. Mit der variablen Kanalweite lässt sich bspw. der wandnahe Massenstrom umverteilen und vergleichmäßigen. Bildlich gesprochen strebt die Heißgasströmung in Richtung des größten freien Querschnitts, also dorthin, wo die radiale Weite am größten ist, womit sich Grenzschichtkonvergenzen auflösen und Ungleichförmigkeiten vermeiden lassen. Mit einer Anpassung der radialen Weite kann sich vorteilhafterweise der Wirkungsgrad erhöhen lassen.

Bevorzugte Ausführungsformen finden sich in den abhängigen Ansprüchen und der gesamten Beschreibung, wobei in der Darstellung der Merkmale nicht immer im Einzelnen zwischen dem Turbinenmodul bzw. der Strömungsmaschine oder auch entsprechender Verwendungen bzw. Arbeitsverfahren unterschieden wird. Jedenfalls implizit ist die Offenbarung hinsichtlich sämtlicher Anspruchskategorien zu lesen.

Jede der Umströmungsstrukturen hat eine Vorder- und eine Hinterkante, dazwischen erstrecken sich jeweils zwei einander entgegengesetzte Seitenflächen der jeweiligen Umströmungsstruktur. Die Profildicke wird zwischen den Seitenflächen genommen. Im Einzelnen erstreckt sich mittig zwischen den Seitenflächen jeweils die Skelettlinie zwischen Vorder- und Hinterkante der jeweiligen Umströmungsstruktur und ergibt sich die Profildicke dann als größter Kreisdurchmesser auf der Skelettlinie (der Kreis berührt die Seitenflächen, der Mittelpunkt liegt auf der Skelettlinie). Die dünne Umlenkschaufel kann bspw. eine um mindestens 50 %, 60 %, 70 % bzw. 80 % geringere Profildicke als die erste Umströmungsstruktur haben, mit möglichen (davon unabhängigen) Obergrenzen bei bspw. höchstens 99 %, 97 % bzw. 95 % (jeweils in der Reihenfolge der Nennung zunehmend bevorzugt).

Soweit generell im Rahmen dieser Offenbarung die Umströmungsstrukturen untereinander verglichen werden, wird die Ausgestaltung der jeweiligen Struktur in ihrer jeweiligen radialen Mitte zugrunde gelegt. Betrachtet wird also jeweils die Form in halber Höhe (radial genommen) der entsprechenden Umströmungsstruktur bzw. der Umlenkschaufel oder des Schaufelblatts. Radial mittig des Gaskanals kann der Einfluss auf die Strömung am größten sein. Bevorzugt sind die jeweiligen Strukturen aber gleichwohl über ihre gesamte Höhe relativ zueinander entsprechend ausgestaltet (jedenfalls bei einem Vergleich in jeweils prozentual gleicher Höhe). Generell bezieht sich im Rahmen dieser Offenbarung "axial" auf die Längsachse des Turbinenmoduls, mithin also die Längsachse der Strömungsmaschine, die bspw. mit einer Drehachse der Rotoren zusammenfällt. "Radial" betrifft die dazu senkrechten, davon weg weisenden Radialrichtungen, und ein "Umlauf" bzw. "umlaufend" oder die "Umlaufrichtung" betreffen die Drehung um die Längsachse. "Ein" und "eine" sind im Rahmen dieser Offenbarung ohne ausdrücklich gegenteilige Angabe als unbestimmte Artikel und damit immer auch als "mindestens ein" bzw. "mindestens eine" zu lesen. Soweit die "radiale Weite des Heißgaskanals" betrachtet wird, insbesondere die Variation davon, bleiben dabei die Umströmungsstrukturen selbst außer Betracht, wird also ein (theoretisch) von den Umströmungsstrukturen freier Heißgaskanal zugrunde gelegt.

Über einen vollständigen Umlauf gibt es in der Regel jeweils eine Mehrzahl erste und zweite Umströmungsstrukturen, die jeweils untereinander bevorzugt baugleich und drehsymmetrisch angeordnet sind. Ferner kann es zwischen zwei ersten (dicken) Umströmungsstrukturen bevorzugt auch noch weitere dünne Umlenkschaufeln geben (dritte und vierte bzw. auch weitere Umströmungsstrukturen), vgl. auch das Ausführungsbeispiel zur Illustration.

Wie bereits erwähnt, ist die erste Umströmungsstruktur ("dicke Schaufel") bevorzugt als tragende Stützstrebe oder als Verkleidung vorgesehen, insbesondere als Verkleidung einer tragenden Stützstrebe. "Stützstrebe" meint einen tragenden Bestandteil der Strömungsmaschine, bevorzugt trägt die Stützstrebe (gemeinsam mit weiteren, umlaufend angeordneten Stützstreben) das Lager der Turbinenwelle, insbesondere der Hochdruckturbinenwelle. Das Lager ist bevorzugt im Turbinenzwischengehäuse angeordnet (*Mid Turbine Frame*)*.* Die Stützstreben können sich von dem Lager weg jeweils nach radial außen erstrecken und das Lager so speichenförmig zentriert im Gehäuse halten.

Bevorzugt ist die erste Umströmungsstruktur eine Verkleidung, in der bspw. auch eine Versorgungsleitung geführt sein kann, bevorzugt ist sie eine Verkleidung einer Stützstrebe, ist sie also aus aerodynamischen Gründen an das eigentlich tragende Bauteil angesetzt. Eine solche Verkleidung wird auch als *Fairing* bezeichnet. Die *Fairings* haben ein relativ großes Teilungsverhältnis (t/l) von 1 bis 1,5. Über einen gesamten Umlauf können bspw. mindestens 6, 7, 8 bis 9 *Fairings* vorgesehen sein, mögliche Obergrenzen liegen bspw. bei höchstens 20, 18, 16 bzw. 15. Die tragende Funktion bzw. das Umschließen der Stützstrebe erfordern eine gewisse Strukturgröße, also große Profildicke. Dies ist aerodynamisch von Nachteil, was aber durch die Kombination mit der dünnen Umlenkschaufel zumindest teilweise kompensiert wird. Die erste Umströmungsstruktur kann im Allgemeinen auch nicht umlenkend vorgesehen sein, bevorzugt ist sie mit weniger als 5° schwach umlenkend, hat sie aber keine Wirkung auf die Strömung (infolge Radienänderung und Drallsatz wird kein Impuls auf die Strömung übertragen).

Bei einer bevorzugten Ausführungsform ändert sich die radiale Weite des Heißgaskanals in der Umlaufrichtung um den Betrag nach mindestens 2 %, bevorzugt mindestens 3 %. Die prozentualen Änderung bezieht sich dabei auf einen Mittelwert der radialen Weite, der auf derselben Axialposition über einen gesamten Umlauf (360°) genommen wird. Demgegenüber soll die radiale Weite lokal um mindestens 2 % bzw. 3 % kleiner oder größer sein (dies meint "dem Betrag nach"). Vorteilhafte Obergrenzen, die im Allgemeinen auch unabhängig von den Untergrenzen von Interesse sein können und offenbart sein sollen, liegen bei in der Reihenfolge der Nennung zunehmend bevorzugt höchstens 8 %, 7 %, 6 % bzw. 5 % (jeweils dem Betrag nach, die radiale Weite kann also entsprechend kleiner oder größer sein). Besonders bevorzugt kann eine Abweichung von rund 4 % sein.

In bevorzugter Ausgestaltung ist eine Gehäusewandfläche, welche den Heißgaskanal nach radial außen begrenzt, mit einer radialen Erhebung und/oder einer radialen Vertiefung geformt, bevorzugt sind jeweils mehrere Erhebungen bzw. Vertiefungen. An der Gehäusewandfläche kann es aufgrund des Einflusses des Rotorspaltes zu einer Minderumlenkung (*underturning*) kommen, durch die Gestaltung mit Erhebungen/Vertiefungen kann einer Grenzschichtkonvergenz vorgebeugt werden. Inwiefern bzw. ob eine Erhebung oder Vertiefung vorliegt, richtet sich hierbei nach einer "ungestörten" Gehäusewandfläche als Referenz, die in einer zur Längsachse senkrechten Schnittebene betrachtet auf derselben Axialposition kreisförmig ist (und einen Radius hat, der dem mittleren Radius der "gestörten" Gehäusewandfläche entspricht). Die Erhebungen/Vertiefungen können in Richtung der Strömung langgestreckt sein, also bspw. jeweils eine elliptische Form haben.

Bei einer bevorzugten Ausführungsform ist eine Nabenwandfläche, die den Heißgaskanal nach radial innen begrenzt, mit einer radialen Erhebung und/oder Vertiefung geformt, bevorzugt mehreren Erhebungen und/oder Vertiefungen. An der Nabenwandfläche kann es infolge des Kanalwirbels an der Rotornabe der Hochdruckturbine zur Mehrumlenkung (*overturning*) kommen, mit den Erhebungen/Vertiefungen dort kann Grenzschichtkonvergenzen und Blockaden vorgebeugt werden. Die Referenz ist wiederum eine Nabenwandfläche mit ungestörtem Verlauf und dem gleichen (mittleren) Radius. Im Allgemeinen kann eine entsprechende Gestaltung der Nabenwandfläche auch eine Alternative zu einer Gehäusewandfläche mit "gestörtem" Verlauf sein (oder umgekehrt), bevorzugt werden beide Maßnahmen kombiniert.

Generell tritt die Gehäusewandfläche im Bereich einer radialen Erhebung nach radial innen hervor (zur Längsachse hin) und ist sie im Bereich einer Vertiefung nach radial außen zurückversetzt (von der Längsachse weg). Die Nabenwandfläche tritt im Bereich einer Erhebung nach radial außen hervor und ist im Bereich einer Vertiefung nach radial innen zurückversetzt.

Bei einer bevorzugten Ausführungsform ist die radiale Weite des Heißgaskanals an der Saugseite der als Umlenkschaufel ausgebildeten, zweiten (dünnen) Umströmungsstruktur größer als an ihrer Druckseite. Der freie Querschnitt ist also druckseitig verringert und/oder saugseitig vergrößert (gegenüber dem vorstehend genannten Mittelwert), bevorzugt beides. Die Strömung wird so örtlich verzögert (Saugseite) bzw. beschleunigt (Druckseite), womit sich einer Grenzschichtkonvergenz und hohen Widerständen an den Ringraumbewandungen vorbeugen lässt.

Bei einer bevorzugten Ausführungsform, die eine erste Umströmungsstruktur (dicke Schaufel) mit einer Saug- und einer Druckseite betrifft, ist in einem Hinterkantenbereich der ersten Umströmungsstruktur die radiale Weite an der Saugseite größer als an der Druckseite der ersten Umströmungsstruktur. Saug- und Druckseite der ersten Umströmungsstruktur ergeben sich aus der Gesamtumlenkung.

Dieser Hinterkantenbereich liegt in bevorzugter Ausgestaltung zwischen 70 % und 100 % einer axialen Länge der ersten Umströmungsstruktur. Betrachtet wird der axiale Anteil ihrer Sehnenlänge, und zwar von stromauf nach stromab genommen (0 % bei der Vorderkante, 100 % bei der Hinterkante). Besonders bevorzugt liegt der Hinterkantenbereich, in dem die radiale Weise saugseitig größer als druckseitig ist, zwischen 80 % und 100 % bzw. 85 % und 100 % der axialen Länge.

Bei einer bevorzugten Ausführungsform ist die erste Umströmungsstruktur saugseitig der zweiten Umströmungsstruktur angeordnet. Die beiden Umströmungsstrukturen sind umlaufend zueinander nächstbenachbart, die zweite (dünne) Umströmungsstruktur kann bspw. an der Hinterkante der aerodynamisch ungünstigeren, dicken Schaufel einen Sog erzeugen. Sie kann also die Strömung von dort ein Stück weit weg beschleunigen, was den Nachlauf verfeinern bzw. vergleichmäßigen kann. Besonders vorteilhaft lässt sich dies erreichen, wenn die Hinterkante der zweiten Umströmungsstruktur gegenüber jener der ersten Umströmungsstruktur nach axial stromabwärts versetzt ist.

Jener Teil des Heißgases, der zwischen der ersten (dicken) und der zweiten (dünnen) Umströmungsstruktur hindurchströmt, passiert stromaufwärts einen ersten Einströmbereich (weswegen dieser Teil des Heißgases auch als "erster Teil" bezeichnet wird). Zwischen den Umströmungsstrukturen wird das Heißgas zu beiden Seiten hin (senkrecht zur Strömungsrichtung) von den Umströmungsstrukturen eingefasst, in dem Einströmbereich von keiner bzw. allenfalls der ersten Umströmungsstruktur (zu einer Seite hin). In diesem Einströmbereich ist nun erfindungsgemäß die radiale Weite des Heißgaskanals an der Druckseitenwand der ersten Umströmungsstruktur (dicken Schaufel) größer als an der Vorderkante der zweiten Umströmungsstruktur. Es kann sich bspw. aus einer Simulation der Druckverteilungen ergeben, dass eine entsprechende Anpassung der Weiten zu einer vorteilhaften Umverteilung bzw. Vergleichmäßigung des Massenstroms führt.

Bei einer bevorzugten Ausführungsform ist eine dritte (dünne) Umströmungsstruktur vorgesehen. Die dritte Umströmungsstruktur ist dann druckseitig der zweiten Umströmungsstruktur angeordnet, die erste Umströmungsstruktur saugseitig der zweiten Umströmungsstruktur. Bevorzugt ist eine Anordnung, bei welcher die Vorderkanten der dünnen Umströmungsstrukturen zunehmend axial versetzt sind, also jene der dritten Umströmungsstruktur gegenüber jener der zweiten Umströmungsstruktur axial stromabwärts versetzt ist. Im Allgemeinen ist auch ein Versatz der Hinterkanten denkbar, bevorzugt liegen die Hinterkanten der dünnen Umströmungsstrukturen auf derselben axialen Höhe, haben die dünnen Umströmungsstrukturen dann also eine unterschiedliche axiale Länge. Die Hinterkanten der dünnen Umströmungsstrukturen können gegenüber jener der ersten (dicken) Umströmungsstruktur axial stromabwärts versetzt sein, sie können aber ebenso auf derselben axialen Höhe liegen.

Bei einer bevorzugten Ausführungsform ist die radiale Weite des Heißgaskanals saugseitig der dritten Umströmungsstruktur größer als druckseitig davon, bevorzugt ist sie saugseitig kleiner und zugleich druckseitig größer als eine mittlere radiale Weite.

Eine weitere bevorzugte Ausführungsform betrifft einen zweiten Teil des Heißgases, nämlich jenen Teil, der zwischen der zweiten und der dritten Umströmungsstruktur hindurchströmt. Dieser zweite Teil des Heißgases passiert stromauf einen zweiten Einströmbereich, in dem das Heißgas (noch nicht) zu beiden Seiten von der zweiten und der dritten Umströmungsstruktur eingefasst wird, vgl. auch die vorstehenden Anmerkungen. In diesem zweiten Einströmbereich ist die radiale Weite des Heißgaskanals bevorzugt reduziert, ist sie also kleiner als ein auf derselben Axialposition über einen gesamten Umlauf gebildeter Mittelwert.

Bei einer bevorzugten Ausführungsform ist eine vierte, als Umlenkschaufel mit Saug- und Druckseite ausgelegte Umströmungsstruktur vorgesehen. Diese ist druckseitig der dritten Umströmungsstruktur vorgesehen, es folgt dann also an der Druckseite der ersten, dicken Umströmungsstruktur zunächst die zweite (dünne), dann die dritte (dünne) und schließlich die vierte (dünne) Umströmungsstruktur. Bevorzugt sind die Umströmungsstrukturen jeweils mit ihrer Vorderkante zunehmend stromabwärts versetzt (in der Reihenfolge ihrer Nennung zunehmend). Bevorzugt ist der Heißgaskanal wiederum dahingehend angepasst, dass die radiale Weite an der Saugseite der vierten Umströmungsstruktur größer als an der Druckseite ist.

Eine bevorzugte Ausgestaltung betrifft jenen Teil des Heißgases, der zwischen der dritten und der vierten Umströmungsstruktur hindurchströmt und als "dritter Teil" bezeichnet wird. Stromauf passiert dieser dritte Teil des Heißgases einen dritten Einströmbereich, in dem das Heißgas (noch nicht) zu beiden Seiten von den Umströmungsstrukturen eingefasst wird. In diesem dritten Einströmbereich ist die radiale Weite des Heißgaskanals bevorzugt reduziert, ist sie also kleiner als ein auf derselben Axialposition über den gesamten Umlauf gebildeter Mittelwert.

Die Erfindung betrifft auch eine Strömungsmaschine mit einem vorliegend beschriebenen Turbinenmodul, insbesondere ein Strahltriebwerk. Das Turbinenmodul kann bevorzugt ein Turbinenzwischengehäuse sein (*Mid Turbine Frame*), siehe vorne.

Die Erfindung betrifft auch ein Verfahren zum Betreiben eines vorliegenden beschriebenen Turbinenmoduls bzw. einer entsprechenden Strömungsmaschine, bei welchem das Heißgas den Heißgaskanal durchströmt. Es kann dann insbesondere ein erster Teil des Heißgases den ersten Einströmbereich durchströmen (siehe vorne) und/oder ein zweiter Teil den zweiten Einströmbereich bzw. ein dritter Teil den dritten Einströmbereich.

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Schnitt;
- Figur 2: eine schematische Detailansicht zur Fig. 1;
- Figur 3: eine erfindungsgemäße Anordnung von Umströmungsstrukturen in einem Turbinenzwischengehäuse des Strahltriebwerks gemäß Fig. 1.

### Bevorzugte Ausführung der Erfindung

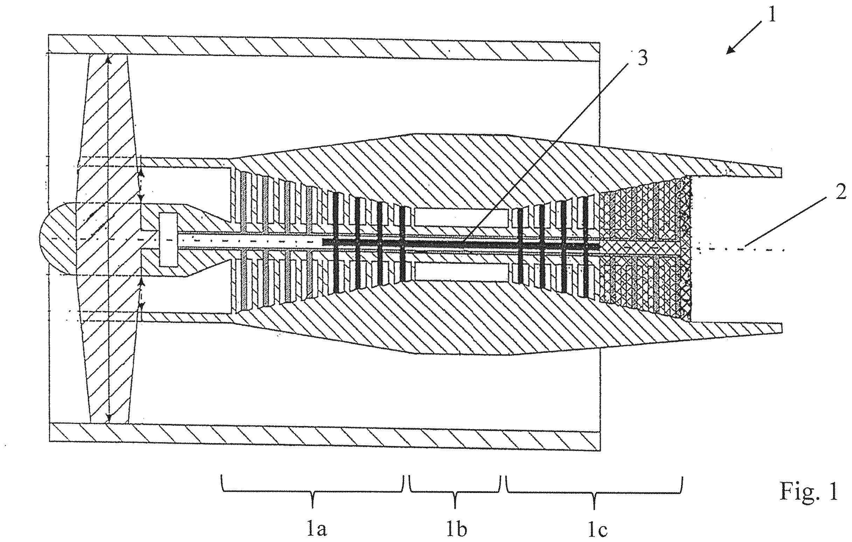

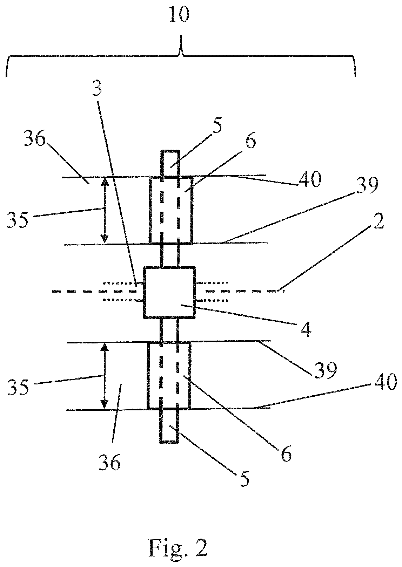

**Figur 1** zeigt eine Strömungsmaschine 1 im Schnitt, konkret ein Strahltriebwerk. **Figur 2** zeigt eine schematische Detailansicht dazu, die folgenden Anmerkungen beziehen sich auf beide Figuren. Funktional gliedert sich die Strömungsmaschine 1 in Verdichter 1a, Brennkammer 1b und Turbine 1c. Sowohl der Verdichter 1a als auch die Turbine 1c sind jeweils aus mehreren Komponenten bzw. Stufen aufgebaut, jede Stufe setzt sich in der Regel aus einem Leit- und einem Laufschaufelkranz zusammen. Die Laufschaufelkränze rotieren im Betrieb um die Längsachse 2 der Strömungsmaschine 1. Die Turbinenwelle 3 ist in einem Lager 4 geführt, das von Stützstreben 5 (teils strichliert) in der übrigen Strömungsmaschine 1 gehalten wird. Im Bereich des Heißgaskanals ist jede der Stützstreben 5 aus aerodynamischen und auch thermischen Gründen ummantelt, nämlich von einer ersten Umströmungsstruktur 6, die eine Verkleidung darstellt und auch als *Fairing* bezeichnet wird. Dieses Turbinenmodul 10 ist ein sogenanntes Turbinenzwischengehäuse. Bei der erfindungsgemäßen Strömungsmaschine 1 ist dieses integral mit dem darauffolgenden Leitschaufelkranz ausgeführt.

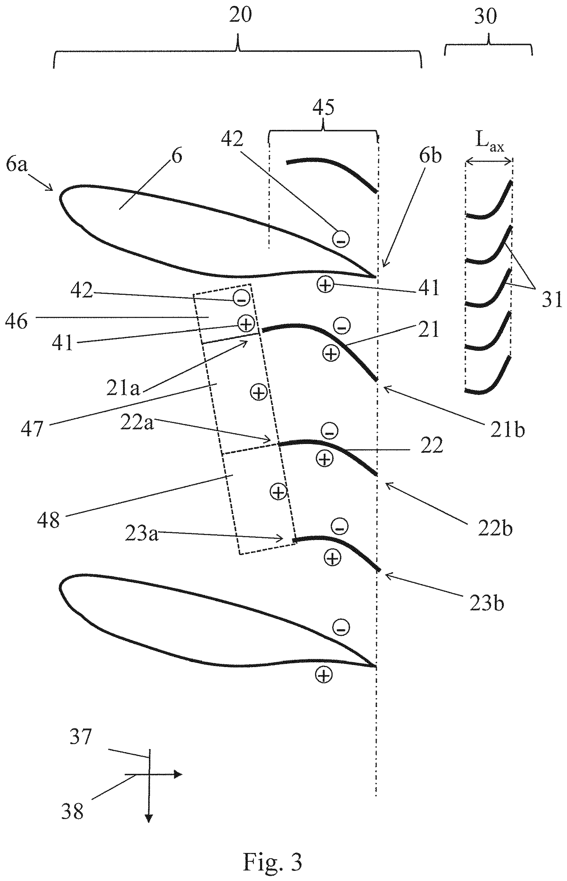

**Figur 3** zeigt als Teil des Turbinenmoduls 10 eine Anordnung mit der ersten (dicken) Umströmungsstruktur 6, zusammen mit einer zweiten Umströmungsstruktur 21, einer dritten Umströmungsstruktur 22 und einer vierten Umströmungsstruktur 23. Die zweiten, dritten und vierten Umströmungsstrukturen 21, 22 und 23 sind jeweils als Umlenkschaufeln mit einer Saugseite (in der Figur oben) und einer Druckseite (in der Figur unten) ausgebildet. Die Profildicke dieser dünnen Umlenkschaufeln beträgt nur rund 30 % der Profildicke der ersten Umströmungsstrukturen 6, also der *Fairings* (in der schematischen Darstellung gemäß Fig. 3 sind die dünnen Umlenkschaufeln vereinfacht als Linien ohne Profildicke wiedergegeben).

Die Umströmungsstrukturen 6, 21, 22, 23 haben jeweils eine Vorderkante 6a, 21a, 22a, 23a und stromabwärts dazu eine jeweilige Hinterkante 6b, 21b, 22b, 23b. Die Vorderkanten 6a, 21a, 22a, 23a sind von der ersten 6 über die zweite 21 und dritte 22 zur vierten Umströmungsstruktur 23 zunehmend axial stromabwärts versetzt. In der vorliegenden Darstellung liegen die Hinterkanten 6b, 21b, 22b, 23b auf derselben Axialposition, es könnten aber auch die Hinterkanten 21b, 22b, 23b der dünnen Umlenkschaufel gegenüber jener der ersten Umströmungsstruktur 6 axial stromabwärts versetzt sein. Generell können die zweiten, dritten und vierten Umströmungsstrukturen 21, 22, 23 die Umströmung der aerodynamisch eher ungünstigen ersten Umströmungsstruktur 6 verbessern, insbesondere den Nachlauf und damit die Anströmung des darauffolgenden Rotors 30 (mit der Beschaufelung 31) verfeinern bzw. vergleichmäßigen helfen.

Ferner ist erfindungsgemäß eine radiale Weite 35 des Heißgaskanals 36 variiert (vgl. Fig. 2 bzgl. der Bezugszeichen), sie ändert sich also jedenfalls in einer Umlaufrichtung 37 und bevorzugt auch in der Axialrichtung 38, vgl. Fig. 3.

Dazu sind eine Nabenwandfläche 39, welche den Heißgaskanal 36 nach radial innen begrenzt, und eine Gehäusewandfläche 40, welche den Heißgaskanal 36 nach radial außen begrenzt, jeweils mit Erhebungen 41 und Vertiefungen 42 geformt. In Fig. 3 sind diese jeweils exemplarisch kreisförmig eingezeichnet, sie können aber insbesondere auch eine langgestreckte, bspw. elliptische Form haben. Der Übersichtlichkeit halber sind nicht alle Erhebungen (+) und Vertiefungen (-) mit jeweils einem eigenen Bezugszeichen versehen. Im Bereich einer jeweiligen Erhebung 41 sind die Wandflächen 39, 40 in den Heißgaskanal 36 hinein gewölbt, ist also der Kanalquerschnitt verengt. Umgekehrt sind im Bereich der Vertiefungen 42 die Wandflächen 39, 40 eingedellt, also jeweils vom Heißgaskanal 36 weg gewölbt, ist also der Strömungsquerschnitt vergrößert.

Wie aus Fig. 3 ersichtlich, ist bei den dünnen Umlenkschaufeln jeweils der Kanal druckseitig verengt und saugseitig erweitert. Auch in einem Hinterkantenbereich 45 der ersten Umströmungsstruktur 6 ist der Kanal auf deren Druckseite verengt und saugseitig erweitert. Ferner gibt es einen ersten Einströmbereich 46, einen zweiten Einströmbereich 47 und einen dritten Einströmbereich 48. Einen jeweiligen Einströmbereich 46, 47, 48 passiert das Heißgas, bevor es zwischen den jeweiligen, umlaufend nächstbenachbarten Umströmungsstrukturen hindurchströmt. Wie aus Fig. 3 ersichtlich, ist in dem ersten Einströmbereich 46 an der Druckseite der ersten Umströmungsstruktur 6 der Kanal erweitert, aber an der Vorderkante 21a der zweiten Umströmungsstruktur 21 verengt. Ferner ist in dem zweiten Einströmbereich 47 der Kanal verengt, dann aber wiederum im dritten Einströmbereich 48 erweitert. Insgesamt kann mit der gezeigten Anordnung eine örtliche Verzögerung (Kanal verengt) oder Beschleunigung (Kanal erweitert) in der Anströmung erreicht werden und es lässt sich damit einer Grenzschichtkonvergenz und hohen Blockaden an den Wänden 39, 40 vorbeugen. Dazu wird, wie dargestellt, die radiale Weite 35 in Bereichen mit Grenzschichtkonvergenz erweitert.

**BEZUGSZEICHENLISTE**

| | | |
|---|---|---|
| Strömungsmaschine | | 1 |
| | Verdichter davon | 1a |
| | Brennkammer davon | 1b |
| | Turbine davon | 1c |
| Längsachse | | 2 |
| Turbinenwelle | | 3 |
| Lager | | 4 |
| Stützstreben | | 5 |
| Erste Umströmungsstruktur | | 6 |
| | Vorderkante davon | 6a |
| | Hinterkante davon | 6b |
| Turbinenmodul | | 10 |
| Zweite Umströmungsstruktur | | 21 |
| | Vorderkante davon | 21a |
| | Hinterkante davon | 21b |
| Dritte Umströmungsstruktur | | 22 |
| | Vorderkante davon | 22a |
| | Hinterkante davon | 22b |
| Vierte Umströmungsstruktur | | 23 |
| | Vorderkante davon | 23a |
| | Hinterkante davon | 23b |
| Rotor | | 30 |
| Beschaufelung | | 31 |
| Radiale Weite | | 35 |
| Heißgaskanal | | 36 |
| Umlaufrichtung | | 37 |
| Axialrichtung | | 38 |
| Nabenwandfläche | | 39 |
| Gehäusewandfläche | | 40 |
| Erhebung | | 41 |
| Vertiefung | | 42 |
| Hinterkantenbereich | | 45 |
| Erster Einströmbereich | | 46 |
| Zweiter Einströmbereich | | 47 |
| Dritter Einströmbereich | | 48 |

## Patentansprüche

1. Turbinenmodul (10) für eine Strömungsmaschine (1), mit
einer ersten Umströmungsstruktur (6) und
einer zweiten Umströmungsstruktur (21),
welche Umströmungsstrukturen (6, 21) in einem von dem Turbinenmodul (10) begrenzten, zum Führen eines Heißgases ausgelegten Heißgaskanal (36) angeordnet sind, und zwar bezogen auf eine Längsachse (2) des Turbinenmoduls (10) in einer Umlaufrichtung (37) aufeinander folgend,
wobei die Umströmungsstrukturen (6, 21) in Bezug auf die Umströmung in dem Heißgaskanal (36) jeweils eine Vorderkante (6a, 21a) und stromabwärts dazu eine Hinterkante (6b, 21b) haben und die zweite Umströmungsstruktur (21) als Umlenkschaufel vorgesehen ist,
wobei die zweite Umströmungsstruktur (21) eine geringere Profildicke als die erste Umströmungsstruktur (6) hat,
und wobei die erste Umströmungsstruktur (6) saugseitig der zweiten Umströmungsstruktur (21) angeordnet ist und ein erster Teil des Heißgases, der zwischen der ersten Umströmungsstruktur (6) und der dazu umlaufend nächstbenachbarten zweiten Umströmungsstruktur (21) hindurchströmt, stromaufwärts einen ersten Einströmbereich (46) passiert, der an einer Druckseitenwand der ersten Umströmungsstruktur (6) und der Vorderkante (21a) der zweiten Umströmungsstruktur (21) liegt,
**dadurch gekennzeichnet, dass** der Heißgaskanal (36) mit einer bezogen auf die Längsachse (2) der Turbinenmoduls (10) radialen Weite (35) gefasst ist, die sich in der Umlaufrichtung (37) verändert,
wobei die radiale Weite (35) des Heißgaskanals (36) in dem ersten Einströmbereich (46) an der Druckseitenwand der ersten Umströmungsstruktur (6) größer als an der Vorderkante (21a) der zweiten Umströmungsstruktur (21) ist.

2. Turbinenmodul (10) nach Anspruch 1, bei welchem sich die radiale Weite (35) des Heißgaskanals (36) in der Umlaufrichtung (37) um dem Betrag nach mindestens 2 % und nicht mehr als 8 % ändert, bezogen auf einen auf derselben Axialposition über einen gesamten Umlauf gebildeten Mittelwert der radialen Weite (35).

3. Turbinenmodul (10) nach Anspruch 1 oder 2, bei welchem eine Gehäusewandfläche (40) des Turbinenmoduls (10), welche den Heißgaskanal (36) nach radial außen begrenzt, mit einer radialen Erhebung (41) und/oder einer radialen Vertiefung (42) geformt ist.

4. Turbinenmodul (10) nach einem der vorstehenden Ansprüche, bei welchem eine Nabenwandfläche (39) des Turbinenmoduls (10), welche den Heißgaskanal (36) nach radial innen begrenzt, mit einer radialen Erhebung (41) und/oder einer radialen Vertiefung (42) geformt ist.

5. Turbinenmodul (10) nach einem der vorstehenden Ansprüche, bei welchem die als Umlenkschaufel vorgesehene zweite Umströmungsstruktur (21) eine Saugseite und eine Druckseite hat, wobei die radiale Weite (35) des Heißgaskanals (36) an der Saugseite der zweiten Umströmungsstruktur (21) größer als an der Druckseite der zweiten Umströmungsstruktur (21) ist.

6. Turbinenmodul (10) nach einem der vorstehenden Ansprüche, bei welchem die erste Umströmungsstruktur (6) eine Saugseite und eine Druckseite hat, wobei in einem Hinterkantenbereich (45) der ersten Umströmungsstruktur (6) die radiale Weite (35) des Heißgaskanals (36) an der Saugseite der ersten Umströmungsstruktur (6) größer als an der Druckseite der ersten Umströmungsstruktur (6) ist.

7. Turbinenmodul (10) nach Anspruch 6, bei welchem der Hinterkantenbereich (45) zwischen 70 % und 100 % einer axialen, in Richtung stromabwärts genommenen Länge der ersten Umströmungsstruktur (6) liegt.

8. Turbinenmodul (10) nach einem der vorstehenden Ansprüche mit einer dritten Umströmungsstruktur (22), die als Umlenkschaufel mit einer Saugseite und einer Druckseite vorgesehen ist und eine geringere Profildicke als die erste Umströmungsstruktur (6) hat, wobei die dritte Umströmungsstruktur (22) druckseitig der zweiten Umströmungsstruktur (21) angeordnet ist und die erste Umströmungsstruktur (6) saugseitig der zweiten Umströmungsstruktur (21) angeordnet ist.

9. Turbinenmodul (10) nach Anspruch 8, bei welchem die radiale Weite (35) des Heißgaskanals (36) an der Saugseite der dritten Umströmungsstruktur (22) größer als an der Druckseite der dritten Umströmungsstruktur (22) ist.

10. Turbinenmodul (10) nach Anspruch 8 oder 9, bei welchem ein zweiter Teil des Heißgases, der zwischen der zweiten Umströmungsstruktur (21) und der dritten Umströmungsstruktur (22) hindurchströmt, stromaufwärts einen zweiten Einströmbereich (47) passiert, in welchem die radiale Weite (35) des Heißgaskanals (36) kleiner als ein Mittelwert der radialen Weite (35) ist, der auf derselben Axialposition über einen gesamten Umlauf gebildet wird.

11. Turbinenmodul (10) nach einem der Ansprüche 8 bis 10 mit einer vierten Umströmungsstruktur (23), die als Umlenkschaufel mit einer Saugseite und einer Druckseite vorgesehen ist und eine geringere Profildicke als die erste Umströmungsstruktur (6) hat und druckseitig der dritten Umströmungsstruktur (22) angeordnet ist, wobei die radiale Weite (35) des Heißgaskanals (36) an der Saugseite der vierten Umströmungsstruktur (23) größer als an der Druckseite der vierten Umströmungsstruktur (23) ist.

12. Turbinenmodul (10) nach Anspruch 11, bei welchem ein dritter Teil des Heißgases, der zwischen der dritten Umströmungsstruktur (22) und der vierten Umströmungsstruktur (23) hindurchströmt, stromaufwärts einen dritten Einströmbereich (48) passiert, in welchem die radiale Weite (35) des Heißgaskanals (36) kleiner als ein Mittelwert der radialen Weite (35) ist, der auf derselben Axialposition über einen gesamten Umlauf gebildet wird.

13. Strömungsmaschine (1), insbesondere Strahltriebwerk, mit einem Turbinenmodul (10) nach einem der vorstehenden Ansprüche.

14. Verfahren zum Betreiben eines Turbinenmoduls (10) nach einem der Ansprüche 1 bis 12 oder einer Strömungsmaschine (1) nach Anspruch 13, bei welchem der Heißgaskanal (36) von dem Heißgas durchströmt wird.

## Claims

1. Turbine module (10) for a turbomachine (1), comprising
a first flow bypass structure (6) and
a second flow bypass structure (21),
which flow bypass structures (6, 21) are arranged in a hot gas channel (36) which is delimited by the turbine module (10) and designed for conducting a hot gas, and are arranged consecutively in a circumferential direction (37) with respect to a longitudinal axis (2) of the turbine module (10),
the flow bypass structures (6, 21) each having, with respect to the bypass flow in the hot gas channel (36), a leading edge (6a, 21a) and a trailing edge (6b, 21b) downstream thereof, and the second flow bypass structure (21) being provided in the form of a deflection vane,
the second flow bypass structure (21) having a smaller profile thickness than the first flow bypass structure (6),
and the first flow bypass structure (6) being arranged on the suction side of the second flow bypass structure (21), and a first portion of the hot gas that flows through between the first flow bypass structure (6) and the second flow bypass structure (21), which is adjacent thereto in terms of circulation, passes, upstream, a first inflow region (46) which is on a pressure-side wall of the first flow bypass structure (6) and the leading edge (21a) of the second flow bypass structure (21),
**characterized in that** the hot gas channel (36) is designed so as to have a radial width (35), with respect to the longitudinal axis (2) of the turbine module (10), which changes in the circulation direction (37),
the radial width (35) of the hot gas channel (36) in the first inflow region (46) being greater on the pressure-side wall of the first flow bypass structure (6) than on the leading edge (21a) of the second flow bypass structure (21).

2. Turbine module (10) according to claim 1, in which the radial width (35) of the hot gas channel (36) in the circulation direction (37) changes by the amount of at least 2% and not more than 8%, with respect to an average value of the radial width (35) that is formed at the same axial position over an entire circulation.

3. Turbine module (10) according to either claim 1 or claim 2, in which a housing wall surface (40) of the turbine module (10), which surface delimits the hot gas channel (36) radially outward, is shaped so as to have a radial elevation (41) and/or a radial depression (42).

4. Turbine module (10) according to any of the preceding claims, in which a hub wall surface (39) of the turbine module (10), which surface delimits the hot gas channel (36) radially inward, is shaped so as to have a radial elevation (41) and/or a radial depression (42).

5. Turbine module (10) according to any of the preceding claims, in which the second flow bypass structure (21), provided as a deflection vane, has a suction side and a pressure side, wherein the radial width (35) of the hot gas channel (36) is greater on the suction side of the second flow bypass structure (21) than on the pressure side of the second flow bypass structure (21).

6. Turbine module (10) according to any of the preceding claims, in which the first flow bypass structure (6) has a suction side and a pressure side, wherein, in a trailing edge region (45) of the first flow bypass structure (6), the radial width (35) of the hot gas channel (36) is greater on the suction side of the first flow bypass structure (6) than on the pressure side of the first flow bypass structure (6).

7. Turbine module (10) according to claim 6, in which the trailing edge region (45) is between 70% and 100% of an axial length of the first bypass flow bypass structure (6) taken in the downstream direction.

8. Turbine module (10) according to any of the preceding claims, comprising a third flow bypass structure (22) which is provided as a deflection vane having a suction side and a pressure side and has a smaller profile thickness than the first flow bypass structure (6), wherein the third flow bypass structure (22) is arranged on the pressure side of the second flow bypass structure (21) and the first flow bypass structure (6) is arranged on the suction side of the second flow bypass structure (21).

9. Turbine module (10) according to claim 8, in which the radial width (35) of the hot gas channel (36) is greater on the suction side of the third flow bypass structure (22) than on the pressure side of the third flow bypass structure (22).

10. Turbine module (10) according to either claim 8 or claim 9, in which a second portion of the hot gas that flows through between the second flow bypass structure (21) and the third flow bypass structure (22) passes, upstream, a second inflow region (47) in which the radial width (35) of the hot gas channel (36) is smaller than an average value of the radial width (35), which average value is formed in the same axial position over an entire circulation.

11. Turbine module (10) according to any of claims 8 to 10, comprising a fourth flow bypass structure (23) which is provided as a deflection vane having a suction side and a pressure side, has a smaller profile thickness than the first flow bypass structure (6) and is arranged on the pressure side of the third flow bypass structure (22), wherein the radial width (35) of the hot gas channel (36) is greater on the suction side of the fourth flow bypass structure (23) than on the pressure side of the fourth flow bypass structure (23).

12. Turbine module (10) according to claim 11, in which a third portion of the hot gas that flows through between the third flow bypass structure (22) and the fourth flow bypass structure (23) passes, upstream, a third inflow region (48) in which the radial width (35) of the hot gas channel (36) is smaller than an average value of the radial width (35), which average value is formed in the same axial position over an entire circulation.

13. Turbomachine (1), in particular a jet engine, comprising a turbine module (10) according to any of the preceding claims.

14. Method for operating a turbine module (10) according to any of claims 1 to 12 or a turbomachine (1) according to claim 13, in which the hot gas flows through the hot gas channel (36).

## Revendications

1. Module de turbine (10) pour une turbomachine (1), comportant
une première structure d'écoulement (6) et
une deuxième structure d'écoulement (21),
lesquelles structures d'écoulement (6, 21) sont disposées dans un canal de gaz chaud (36) délimité par le module de turbine (10) et conçu pour guider un gaz chaud, notamment l'une après l'autre dans une direction périphérique (37) par rapport à un axe longitudinal (2) du module de turbine (10),
les structures d'écoulement (6, 21) présentant chacune, par rapport à l'écoulement dans le canal de gaz chaud (36), un bord d'attaque (6a, 21a) et un bord de fuite (6b, 21b) en aval de ce dernier, et la deuxième structure d'écoulement (21) étant prévue comme une aube de déviation,
la deuxième structure d'écoulement (21) ayant une épaisseur de profil inférieure à celle de la première structure d'écoulement (6),
et la première structure d'écoulement (6) étant disposée côté aspiration de la deuxième structure d'écoulement (21) et une première partie du gaz chaud, laquelle partie circule entre la première structure d'écoulement (6) et la deuxième structure d'écoulement adjacente (21) entourant la première structure, traversant en amont une première zone d'entrée (46) située sur une paroi latérale de pression de la première structure d'écoulement (6) et sur le bord d'attaque (21a) de la deuxième structure d'écoulement (21),
**caractérisé en ce que** le canal de gaz chaud (36) est entouré par une largeur radiale (35) par rapport à l'axe longitudinal (2) du module de turbine (10), laquelle largeur est modifiée dans la direction périphérique (37),
la largeur radiale (35) du canal de gaz chaud (36) étant plus grande dans la première zone d'entrée (46) sur la paroi latérale de pression de la première structure d'écoulement (6) que sur le bord d'attaque (21a) de la deuxième structure d'écoulement (21).

2. Module de turbine (10) selon la revendication 1, dans lequel la largeur radiale (35) du canal de gaz chaud (36) varie, dans la direction périphérique (37), d'une valeur d'au moins 2 % et pas plus de 8 %, par rapport à une valeur moyenne de la largeur radiale (35), laquelle valeur moyenne est formée sur une périphérie complète dans la même position axiale.

3. Module de turbine (10) selon la revendication 1 ou 2, dans lequel une surface de paroi de boîtier (40) du module de turbine (10) est réalisée, laquelle surface délimite le canal de gaz chaud (36) radialement vers l'extérieur, avec une élévation radiale (41) et/ou une dépression radiale (42).

4. Module de turbine (10) selon l'une des revendications précédentes, dans lequel une surface de paroi de moyeu (39) du module de turbine (10) est réalisée, laquelle surface délimite le canal de gaz chaud (36) radialement vers l'intérieur, avec une élévation radiale (41) et/ou une dépression radiale (42).

5. Module de turbine (10) selon l'une des revendications précédentes, dans lequel la deuxième structure d'écoulement (21) prévue comme aube de déviation présente un côté aspiration et un côté pression, la largeur radiale (35) du canal de gaz chaud (36) étant plus grande du côté aspiration de la deuxième structure d'écoulement (21) que du côté pression de la deuxième structure d'écoulement (21).

6. Module de turbine (10) selon l'une des revendications précédentes, dans lequel la première structure d'écoulement (6) présente un côté aspiration et un côté pression, la largeur radiale (35) du canal de gaz chaud (36) dans une zone de bord de fuite (45) de la première structure d'écoulement (6) étant plus grande du côté aspiration de la première structure d'écoulement (6) que du côté pression de la première structure d'écoulement (6).

7. Module de turbine (10) selon la revendication 6, dans lequel la zone de bord de fuite (45) se situe entre 70 % et 100 % d'une longueur axiale de la première structure d'écoulement (6), laquelle longueur axiale est prise dans le sens aval.

8. Module de turbine (10) selon l'une des revendications précédentes, comportant une troisième structure d'écoulement (22) qui est prévue comme aube de déviation présentant un côté aspiration et un côté pression, et qui a une épaisseur de profil inférieure à celle de la première structure d'écoulement (6), la troisième structure d'écoulement (22) étant disposée côté pression de la deuxième structure d'écoulement (21), et la première structure d'écoulement (6) étant disposée côté aspiration de la deuxième structure d'écoulement (21).

9. Module de turbine (10) selon la revendication 8, dans lequel la largeur radiale (35) du canal de gaz chaud (36) est plus grande du côté aspiration de la troisième structure d'écoulement (22) que du côté pression de la troisième structure d'écoulement (22).

10. Module de turbine (10) selon la revendication 8 ou 9, dans lequel une deuxième partie du gaz chaud, laquelle partie circule entre la deuxième structure d'écoulement (21) et la troisième structure d'écoulement (22), traverse en amont une deuxième zone d'entrée (47) dans laquelle la largeur radiale (35) du canal de gaz chaud (36) est inférieure à une valeur moyenne de la largeur radiale (35), laquelle valeur moyenne est formée sur une périphérie complète dans la même position axiale.

11. Module de turbine (10) selon l'une des revendications 8 à 10, comportant une quatrième structure d'écoulement (23) qui est prévue comme aube de déviation présentant un côté aspiration et un côté pression, qui a une épaisseur de profil inférieure à celle de la première structure d'écoulement (6), et est disposée côté pression de la troisième structure d'écoulement (22), la largeur radiale (35) du canal de gaz chaud (36) étant plus grande du côté aspiration de la quatrième structure d'écoulement (23) que du côté pression de la quatrième structure d'écoulement (23).

12. Module de turbine (10) selon la revendication 11, dans lequel une troisième partie du gaz chaud, laquelle partie circule entre la troisième structure d'écoulement (22) et la quatrième structure d'écoulement (23), traverse en amont une troisième zone d'entrée (48) dans laquelle la largeur radiale (35) du canal de gaz chaud (36) est inférieure à une valeur moyenne de la largeur radiale (35), laquelle valeur moyenne est formée sur une périphérie complète dans la même position axiale.

13. Turbomachine (1), notamment turboréacteur, comportant un module de turbine (10) selon l'une des revendications précédentes.

14. Procédé permettant de faire fonctionner un module de turbine (10) selon l'une des revendications 1 à 12 ou une turbomachine (1) selon la revendication 13, dans lequel le gaz chaud circule dans le canal de gaz chaud (36).
